# FASCICULE DE BREVET EUROPEEN

(11) **EP 1 153 153 B1**
(45) Date de publication et mention de la délivrance du brevet: **07.04.2004**
(21) Numéro de dépôt: 00900665.1
(22) Date de dépôt: 26.01.2000
(51) Int. Cl.: C22F 1/00, B21C 23/00

(54) **PROCEDE DE FABRICATION D'UNE PIECE EN ALLIAGE A MEMOIRE DE FORME ET PIECE OBTENUE PAR CE PROCEDE**
VERFAHREN ZUR HERSTELLUNG EINES WERKSTÜCKS AUS GEDÄCHTNISLEGIERUNG SOWIE NACH DIESEM VERFAHREN HERGESTELLTES WERKSTÜCK
METHOD FOR MAKING A PART IN SHAPE MEMORY ALLOY AND PART OBTAINED BY SAID METHOD

(30) Priorité: 27.01.1999 FR 9900871
(43) Date de publication de la demande: 14.11.2001
(73) Titulaire: COMMISSARIAT A L'ENERGIE ATOMIQUE, 75752 Paris Cédex 15 (FR)
(72) Inventeur: NUNES, Daniel, F-91400 Saclay (FR); OLIER, Patrick, F-92320 Chatillon (FR)
(74) Mandataire: Audier, Philippe André
(86) Numéro de dépôt international: PCT/FR2000/000173
(87) Numéro de publication internationale: WO 2000/044957

(56) Documents cités:
- EP-A- 0 408 259
- JP-A- 59 192 401
- PATENT ABSTRACTS OF JAPAN vol. 014, no. 049 (M-0927), 29 janvier 1990 (1990-01-29) & JP 01 277684 A (SHARP CORP), 8 novembre 1989 (1989-11-08)

## Description

L'invention concerne un procédé de fabrication de mise en forme et d'usinage d'une pièce en alliage à mémoire de forme, ainsi que la pièce ainsi obtenue qui présente des propriétés fonctionnelles remarquables.

Le domaine technique de l'invention peut être défini de manière générale comme celui de la métallurgie et de la science des matériaux. Plus particulièrement, l'invention se situe dans le secteur des alliages à mémoire de forme, de leur fabrication et de leur mise en forme ou usinage.

Rappelons qu'un alliage métallique possède une mémoire de forme si, après déformation permanente, à froid ou lors d'un refroidissement sous contrainte, il recouvre sa forme initiale par simple chauffage. Ce phénomène, appelé effet mémoire simple sens (EMSS), a pour origine une transformation martensitique se produisant au-delà d'une température critique, dite « température de transition ». Cette température de transition peut être ajustée entre -200°C et +170°C, en agissant sur la composition chimique et/ou les traitements thermiques.

Par ailleurs, la transformation martensitique confère aux alliages à mémoire de forme (AMF) d'autres propriétés particulières, telles que : la capacité de générer une force importante pendant le chauffage ; l'effet super élastique, l'effet caoutchoutique, l'effet mémoire double sens assisté (EMDSA) et l'effet mémoire double sens (EMDS). La présence de phase martensitique accroît également fortement les capacités d'amortissement.

Les performances d'un élément en AMF peuvent être généralement évaluées en terme d'amplitude de déplacement et en terme de force de recouvrement disponible au chauffage.

Toutes les propriétés spécifiques des alliages à mémoire de forme expliquent la terminologie de « matériaux fonctionnels » ou « matériaux intelligents » qui est souvent utilisée pour les qualifier.

L'effet mémoire de forme est connu dans les alliages métalliques depuis 1930 et la première application industrielle date de 1967, mais du fait de la complexité de leur comportement, de leur extrême sensibilité aux conditions de fabrication et de leur coût, leur développement industriel et commercial est resté très limité et concerne principalement des secteurs mettant en oeuvre des technologies de pointe, tels que les industries de la défense, de l'espace et du matériel médical.

Les gammes de fabrication utilisées pour fabriquer des alliages à mémoire de forme sont fonction de l'application recherchée et de la géométrie finale voulue pour la pièce ou élément en AMF.

Les pièces en alliage à mémoire de forme utilisées pour les principales applications recensées à ce jour sont de géométrie simple. Il s'agit, en effet, généralement de barres, par exemple, dans les actionneurs de mécanisme de déploiement dans l'espace et les actionneurs pour la robotique ; de fils, par exemple, dans les arcs dentaires, l'instrumentation médicale, les antennes de téléphone portable, les montures de lunettes, les vêtements ; de méplats ou de rubans dans la lunetterie, les activateurs électriques en domotique ; ou de ressorts, comme les « stents » pour sténose dans le domaine médical et les « mouchardes » pour la détection de la rupture de la chaîne du froid dans l'industrie agro-alimentaire, etc.

Les procédés de mise en forme utilisés pour obtenir les pièces présentant les géométries mentionnées ci-dessus, correspondent à l'utilisation de moyens classiques de transformation, tels que des presses à filer pour obtenir des barres ; des bancs d'étirage et de tréfilage pour obtenir des fils ; des laminoirs pour obtenir de la tôle, et des matrices de forme pour obtenir des ressorts.

Des procédés d'usinage peuvent également être utilisés dans le cadre de toute opération de mise en forme par enlèvement de matière destinée à conférer à une pièce en AMF des dimensions et un état de surface, par exemple, un écart de forme et une rugosité situés dans une fourchette de tolérance donnée.

Le document JP-A-59 192401 divulgue un procédé d'usinage d'une pièce en alliage à mémoire de forme. Le document JP-A-01 277684 divulgue un ressort en alliage à mémoire de forme.

En règle générale, l'usinage de l'AMF s'insère ainsi dans la succession des opérations de mise en forme, principalement à deux niveaux :
- soit comme opération de découpe d'une ébauche destinée à être laminée, forgée, emboutie ou usinée ;
- soit comme opération de finition de pièces préalablement filées, étirées, forgées ou assemblées par soudage.

Parmi les procédés de mise en forme, mentionnés ci-dessus, ceux qui font appel à une mise en forme à froid sont délicats à mettre en oeuvre sur les alliages à mémoire de forme et, plus particulièrement, sur les alliages titane-nickel, du fait notamment de la dureté de ces matériaux.

En général, la déformation à froid doit être limitée pour éviter l'endommagement et entrecoupée d'étapes de recuit à température contrôlée pour restaurer le matériau.

Or, la transformation à froid est indispensable pour ces matériaux, parce qu'elle assure, non seulement la précision sur les caractéristiques dimensionnelles finales, mais, en outre, elle confère au matériau un écrouissage qui accroît les propriétés mécaniques et permet une optimisation des propriétés fonctionnelles, telles que l'effet mémoire, la force de recouvrement et la superélasticité. Il a, par ailleurs, été montré que plus l'écrouissage, c'est-à-dire le taux de déformation, est important, plus les propriétés fonctionnelles sont améliorées, en particulier la force de recouvrement et l'amplitude de l'effet mémoire. En outre, à l'issue de la dernière phase de déformation à froid, un traitement thermique de courte durée, dit traitement « flash », situé dans une plage de température définie, doit être effectué pour optimiser les propriétés fonctionnelles.

Il ressort de ce qui précède que la fabrication de pièces finies, c'est-à-dire de géométrie définie en alliage à mémoire de forme, nécessite des gammes de fabrication et de mise en forme longues, complexes et donc onéreuses, comprenant des opérations de transformation à froid difficiles à maîtriser.

Il existe donc un besoin pour un procédé de fabrication et de mise en forme d'une pièce en alliage à mémoire de forme simple, rapide, économique, comportant un nombre limité d'étapes et permettant d'obtenir des pièces présentant des propriétés mécaniques et fonctionnelles au moins égales à celles des procédés connus, complexes, longs et coûteux.

Le but de la présente invention est de fournir un procédé de fabrication et de mise en forme d'une pièce en alliage à mémoire de forme qui réponde, entre autres, à l'ensemble des besoins mentionnés ci-dessus, qui ne présente pas les inconvénients, défauts, limitations et désavantages des procédés de l'art antérieur, et qui résolve Les problèmes des procédés de l'art antérieur.

Ce but et d'autres encore sont atteints, conformément à l'invention, par un procédé de fabrication, de mise en forme, et d'usinage d'une pièce en alliage à mémoire de forme comprenant une étape unique au cours de laquelle la fabrication, la mise en forme, et l'usinage de ladite pièce sont réalisées simultanément en une seule et même opération par un procédé d'usinage de coupe.

Le procédé, selon l'invention, répond à tous les besoins cités ci-dessus, ne présente pas les défauts des procédés de l'art antérieur et résout les problèmes posés par les procédés de l'art antérieur.

Les inventeurs ont mis en évidence, de manière surprenante, qu'en appliquant aux alliages à mémoire de forme un procédé d'usinage spécifique qui est un procédé d'usinage de coupe, il était possible de réaliser fabrication, usinage, mise en forme en une seule étape. Parmi tous les procédés d'usinage connus, seuls les procédés d'usinage de coupe permettent d'atteindre les buts mentionnés plus haut et de résoudre les problèmes de l'art antérieur.

Les procédés d'usinage de coupe présentent la particularité de conduire préférentiellement à la formation de copeaux, au contraire des procédés d'enlèvement de matière par abrasion, ou par voie chimique ou électrochimique.

De manière étonnante, le procédé d'usinage de coupe, mis en oeuvre dans l'invention, confère à la pièce ou copeau en AMF un écrouissage très important et s'accompagne simultanément d'un échauffement extrêmement rapide qui joue le même rôle qu'un traitement thermique, ce traitement thermique « flash » correspond en fait au traitement thermique ultime des procédés de l'art antérieur. De ce fait, grâce au procédé de l'invention, il est possible d'obtenir sur le copeau, en une seule et même opération, des propriétés mécaniques et fonctionnelles remarquables. Il a été montré par les inventeurs que les propriétés des pièces obtenues par le procédé de l'invention, par exemple des ressorts, sont supérieures à celles d'une pièce ou élément en AMF obtenu par un procédé de fabrication de l'art antérieur long et complexe.

Le procédé, selon l'invention telle que définie à la revendication 1, permet à l'issue de son étape unique, d'obtenir directement les propriétés remarquables voulues.

Au contraire des procédés de l'art antérieur qui mettent en jeu une longue suite d'étapes complexes de mise en forme et d'usinage, avec dans la plupart des cas une étape de déformation finale à froid, suivie encore d'un traitement thermique, le procédé, selon l'invention, ne comporte qu'une seule étape unique au cours de laquelle toutes les opérations nécessaires à la fabrication à la mise en forme et à l'usinage de la pièce sont réalisées simultanément. Cette étape unique est, par ailleurs, extrêmement simple, puisqu'elle fait appel à un procédé d'usinage de coupe, simple, fiable et éprouvé.

Le procédé est d'une grande rapidité par rapport aux procédés de l'art antérieur, puisque, outre le gain de temps obtenu en réduisant au minimum le nombre d'étapes, la durée de l'étape unique impliquant un usinage de coupe est également réduite.

La simplicité et la rapidité de l'obtention de la pièce, telle qu'un copeau en alliage à mémoire de forme, vont, par voie de conséquence, conduire à un coût unitaire très faible par rapport aux procédés de fabrication de l'art antérieur. De ce fait, des applications plus larges, dites « grand public », jusqu'alors fermées aux alliages à mémoire de forme du fait de leur coût prohibitif, peuvent être envisagées pour les pièces fabriquées par le procédé de l'invention.

Selon l'invention, le procédé d'usinage de coupe est choisi parmi les procédés d'usinage e coupe à forte vitesse, généralement supérieure à 15 m/min..

Parmi les procédés d'usinage de coupe à forte vitesse, on peut citer, par exemple, le tournage, le chariotage, le décolletage.

Selon l'invention, afin de fabriquer une pièce, telle qu'un copeau homogène, continu, de géométrie définie et/ou présentant les propriétés mécaniques et/ou fonctionnelles voulues, on agit sur un ou plusieurs des paramètres d'usinage, c'est-à-dire les paramètres opératoires du procédé d'usinage de coupe.

Ce ou ces paramètres d'usinage sont généralement choisis, parmi la nature de l'outil de coupe, la profondeur de pénétration par passe (ou épaisseur de coupe), la vitesse d'avance machine ou vitesse de coupe, la position angulaire de l'outil de coupe, l'affûtage de l'outil de coupe et, éventuellement, la vitesse de rotation de l'ébauche à partir de laquelle est fabriquée la pièce.

Il est à noter que ces paramètres ne sont généralement pas indépendants et sont liés à la géométrie de la pièce ébauche utilisée.

Par exemple, la vitesse de rotation est fonction de la géométrie de l'ébauche, notamment du diamètre de l'ébauche, et dépend des capacités de la machine utilisée. Cette vitesse peut varier entre de larges limites. Une vitesse typique est, par exemple, de 250 trs/min.

L'alliage à mémoire de forme, mis en oeuvre dans le procédé de l'invention, peut être tout alliage à mémoire de forme connu. Il est choisi, par exemple, parmi les alliages à base de cuivre, les alliages à base de titane et de nickel, et les alliages à base de fer.

Parmi les alliages à base de cuivre, on peut citer les alliages Cu - Zn, Cu - Al, Cu - Sn, Cu - Zn - Al, Cu - Al - Ni, Cu - Al - Mn, Cu - Al - Be. Les alliages à base de Ti - Ni comprennent les alliages de titane et de nickel en toutes proportions, de préférence, l'alliage 50 - 50 Ti - Ni. L'alliage Ti - Ni peut être légèrement allié avec un ou des élément(s) d'addition Fe, Cu, Zr et Hf.

Parmi les alliages à base de Fe, on peut citer le composé Fe₃Pt, les alliages Fe - Ni - Co - Ti et Fe - Mn - Si avec d'éventuelles additions de Ni et/ou de Cr. Le terme alliage « à mémoire de forme » recouvre tous les alliages présentant ou susceptible de présenter de telles propriétés, les propriétés de « mémoire de forme » comprennent généralement les propriétés d'effet mémoire simple sens (EMSS), d'effet mémoire double sens (EMDS), d'effet mémoire double sens assisté (EMDSA) ou de superélasticité.

La pièce en alliage à mémoire de forme fabriquée par le procédé de l'invention est un copeau homogène et continu. Ce copeau présente, de préférence, une géométrie définie, par exemple, le copeau peut se présenter sous la forme d'une bande ou ruban présentant, de préférence, une longueur, une largeur et une épaisseur précises, mais il pourra aussi se présenter sous la forme d'un méplat.

En outre, selon l'invention, le copeau, de préférence sous forme de ruban, peut être enroulé directement à l'issue du procédé, sans aucune étape supplémentaire, c'est-à-dire que l'on obtient directement en une seule opération, un ressort, par exemple, un ressort hélicoïdal, de préférence à spires jointives, aussitôt utilisable dans tous les dispositifs mettant en oeuvre des ressorts en alliage à mémoire de forme. Un tel ressort hélicoïdal présente des propriétés mécaniques et fonctionnelles excellentes, supérieures à celles des ressorts obtenus par les procédés de l'art antérieur.

Le copeau est également défini par sa masse et son volume et le ressort, de préférence à spires jointives est, en outre, défini par le diamètre des spires, le nombre total de spires et le nombre de spires utilisés.

A titre d'exemple, la masse du copeau sera généralement de 1 mg à 50 g, la largeur du copeau sous forme de ruban sera généralement de 1 ou quelques centièmes de mm (par exemple, 2 à 9 centièmes) à 5 mm et l'épaisseur du copeau sera généralement de 1 ou quelques centièmes de mm (par exemple, 2 à 9 centièmes) à 1 ou quelques dixièmes de mm (par exemple, 2 à 9 dixièmes).

Dans le cas préféré, le copeau est enroulé et se présente donc sous la forme d'un ressort, de préférence, un ressort hélicoïdal, de préférence, encore à spires jointives, le nombre total de spires est généralement de 2 à une ou plusieurs centaines (par exemple, 200 à 1 000) et le nombre de spires utiles est généralement de 2 à une ou plusieurs centaines (par exemple, 200 à 1 000), le diamètre des spires est généralement de 1 à 15 mm.

Comme on l'a indiqué plus haut, la pièce, c'est-à-dire le copeau, obtenue par le procédé selon l'invention présente de remarquables propriétés mécaniques et fonctionnelles. L'une des propriétés fonctionnelles la plus représentative est l'efficacité qui donne le travail disponible par unité de volume de l'AMF.

L'efficacité maximale de la pièce obtenue par ce procédé de l'invention, tel qu'un ressort hélicoïdal à spires jointives, est, de manière générale, supérieure à 10 MJ/m³, de préférence de 10 à 15 MJ/m³, ce qui est nettement supérieur à l'efficacité des pièces, telles que des ressorts hélicoïdaux, préparées par les procédés de l'art antérieur et ce qui différencie clairement les pièces selon l'invention des pièces préparées dans l'art antérieur.

Tout dispositif ou système peut comprendre le ressort en AMF obtenu par le procédé selon l'invention, en particulier, un système ou dispositif de type actionneur ou actionneur/capteur comprenant le ressort en AMF obtenu par le procédé selon l'invention.

Le ressort en alliage à mémoire de forme obtenu par le procédé selon l'invention présente des propriétés d'effet mémoire simple sens (EMSS), d'effet mémoire double sens (EMDS), d'effet mémoire double sens assisté (EMDSA) ou de superélasticité. Le ressort préparé par le procédé de l'invention trouve ainsi son application dans de nombreux secteurs industriels. En priorité, il s'adresse aux domaines où l'utilisation des AMF était jusqu'à maintenant peu répandue, voire exclue, pour des raisons uniquement économique, mais l'invention trouve aussi son application dans tous les domaines industriels où les AMF sont déjà utilisés de manière classique.

On peut penser, par exemple, à certains marchés grand public, tels que ceux du jouet, de la décoration, de la sculpture.

Des applications potentielles concernent aussi tout le secteur de la miniaturisation où le copeau AMF peut concurrencer avantageusement un mini-ressort.

Ceci est à prendre en considération en micro-robotique, par exemple, ou dans le domaine de l'industrie automobile pour lequel il existe une grande diversité d'emplacements recensés pour des activateurs thermiques, tels que : obturateur de radiateur, débrayage du ventilateur, régulateur de climatisation, refroidissement des freins, etc.

L'invention sera mieux comprise à la lecture de la description suivante, d'un mode de réalisation préféré donné à titre illustratif, cette description étant faite en référence aux dessins joints dans lesquels :
- la figure 1A est une vue de dessus en coupe schématique montrant l'usinage par tournage d'une ébauche en alliage à mémoire de forme (AMF) permettant l'obtention d'un copeau continu ;
- la figure 1B est une vue schématique en perspective de l'outil de coupe ;
- la figure 2 est un graphique représentant l'évolution de l'efficacité W/V (E) (en MJ/m³), en fonction de la force de recouvrement (F) (en 10⁻² N) générée au chauffage par le copeau en AMF.

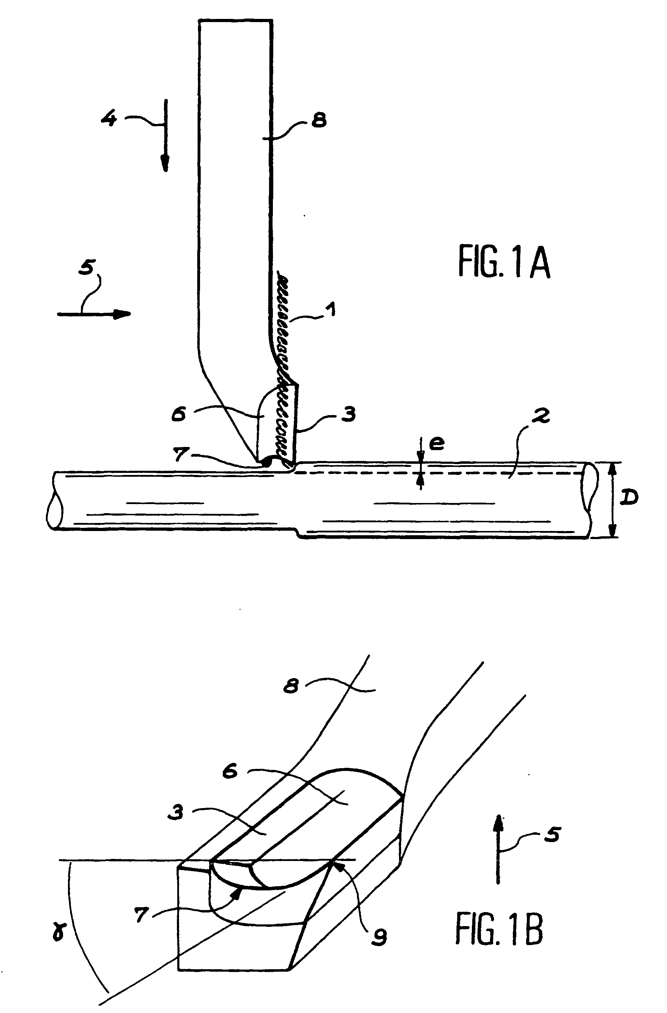

Sur la figure 1, on a donc illustré le cas particulier de la fabrication d'un copeau à spires jointives en alliage à mémoire de forme (1) qui est obtenu par tournage à partir d'une ébauche métallique en alliage à mémoire de forme (2) qui se présente, de préférence, sous la forme d'une barre cylindrique d'un diamètre (D), de préférence, de 5 à 100 mm, par exemple, de 12 mm.

L'alliage en mémoire de forme peut être choisi parmi l'un quelconque des alliages cités plus haut, il s'agit, de préférence, d'un alliage Ti - Ni.

Le copeau (1) est fabriqué à l'aide d'une machine d'usinage par tournage (chariotage) classique, telle qu'un tour muni d'un outil de coupe (3) placé sur un support (8).

A titre d'exemple, de tels tours, on peut citer, par exemple, les tours fabriqués par la Société CAZENEUVE, notamment le modèle 360 HB - X.

On a représenté, sur la figure 1A, par les flèches (4) et (5), respectivement, la direction d'avance et la direction de coupe de l'outil de coupe.

L'outil de coupe utilisé (3) est un outil à plaquette brasée.

Il s'agit, par exemple, d'un outil en carbure de tungstène, par exemple, l'outil de type K 10, (norme ISO) fabriqué par la Société SAFETY®.

Il est préférable que, comme on l'a représenté sur la figure 1, l'outil de coupe présente un affûtage spécifique réalisé, par exemple, à la meule.

Cet affûtage spécifique va revêtir, par exemple, la forme d'une gorge (6) présentant, de préférence, une forme spécifique, par exemple, une section transversale en forme d'arc de cercle avec un rayon spécifique r (7), par exemple, de 1 à 10 mm en fonction du diamètre de l'ébauche, de préférence, de 2 mm.

Une telle gorge obtenue par un tel affûtage spécifique, à la meule, assure le dégagement et l'enroulement du copeau (1) lors de la coupe et l'obtention d'un copeau homogène est continu.

La figure 1B est une vue en perspective de l'outil de coupe qui permet de mieux repérer les différents paramètres d'usinage, ainsi que les différents paramètres géométriques de l'outil de coupe.

L'outil de coupe (3), qui se présente de préférence sous la forme d'une plaquette brasée, est placé sur un support ou porte plaquette (8).

Cet outil de coupe comporte une gorge (6) permettant le dégagement du copeau, le fond de ladite gorge dudit outil de coupe présentant un rayon spécifique r (7). L'outil de coupe (3) comporte également une pointe d'outil (9). On a aussi représenté sur la figure 1B l'angle de coupe γ.

On a vu plus haut que le choix des paramètres d'usinage, c'est-à-dire dans le cas présent des paramètres du procédé de tournage, permettait également d'obtenir un copeau de géométrie définie et présentant directement les propriétés fonctionnelles voulues, telles qu'effet mémoire et super élasticité.

Ainsi, afin d'obtenir un copeau sous forme de ruban se présentant comme un ressort à spires jointives, les paramètres opératoires du tournage doivent, de préférence, se situer dans les plages suivantes :
- profondeur de pénétration par passe (ou épaisseur de coupe), représentée par e sur la figure 1 : de 0,1 à 5 mm, par exemple, 0,88 mm ;
- vitesse d'avance machine (vitesse de coupe) : de 5 à 40 m/min., par exemple, 10 m/min. ;
- angle de coupe défini par un angle γ (voir figure 1B) de 5 à 40°, par exemple, de 10 à 15° ;
- vitesse de rotation de l'ébauche : dépend des capacités de la machine utilisée, par exemple, 250 trs/min.

Les conditions indiquées ci-dessus sont celles qui permettent d'obtenir un copeau en forme de ruban continu homogène formant un ressort à spires jointives dont l'épaisseur, la longueur et la largeur se situent dans les plages données plus haut. Il est bien évident que si l'on souhaite obtenir une pièce de forme différente, les paramètres d'usinage se situeront éventuellement dans des plages différentes.

L'invention va maintenant être décrite en référence aux exemples suivants, donnés à titre illustratif et non limitatif.

### Exemple 1

Cet exemple concerne la fabrication, la caractérisation, et la mesure des propriétés d'un copeau à spires jointives obtenu par tournage à partir d'une ébauche métallique en alliage titane-nickel (50 - 50) sous la forme d'une base cylindrique de 12 mm de diamètre.

### Conditions d'usinage

L'usinage par tournage (chariotage) a été réalisé sur un tour CAZENEUVE de modèle 360 HB - X. Le tableau 1 résume les conditions de fabrication du copeau.

**Tableau 1**

| Paramètres d'usinage en tournage d'un copeau AMF | | | | |
|---|---|---|---|---|
| NATURE DE L'OUTIL DE COUPE UTILISE | VITESSE DE COUPE | VITESSE DE ROTATION | ANGLE DE COUPE | PROFONDEUR DE PENETRATION PAR PASSE |
| Outil carbure type K 10 | 10 m/min. | 250 trs/min. | 10° < γ < 15° angle de coupe rayonné (r - 2 mm) | 0,88 mm |

Un affûtage spécifique de l'outil de coupe à l'aide d'une meule en agglomérat vitrifié permet de réaliser une gorge rayonnée qui assure le dégagement et l'enroulement du copeau lors de la coupe. Les arêtes de coupe positives permettent de bien former le copeau et de le maîtriser pendant son évacuation de la gorge, comme on le voit sur la figure 1B.

Les caractéristiques géométriques types d'un copeau obtenu sont indiquées dans le tableau 2.

**Tableau 2**

| Caractéristiques géométriques d'un copeau AMF | |
|---|---|
| Masse du copeau | m = 0,730 g |
| Volume du copeau* | V = 0,114 cm³ |
| Longueur du copeau | l = 80 mm |
| Largeur du copeau | L = 0,88 ± 0,02 mm |
| Epaisseur du copeau | e = 0,26 ± 0,02 mm |
| Diamètre des spires | D = 2,25 ± 0,02 mm |
| Nombre total de spires | Nt = 76 |
| Nombre de spires utiles | Nu = 72 |

| | |
|---|---|
| * Le volume du copeau se déduit à partir de la masse, du fait que la densité du Ti - Ni (50 - 50) est égale à 6,4 g/cm³. | |

### Température de changement de forme

Les caractéristiques thermiques du copeau, à savoir : température de changement de phase, enthalpie, sont obtenues par analyse en calorimétrie différentielle à balayage (DSC) sur un prélèvement d'une masse de 53 mg du copeau préparé dans le tableau 2. Les caractéristiques sont regroupées dans le tableau 3.

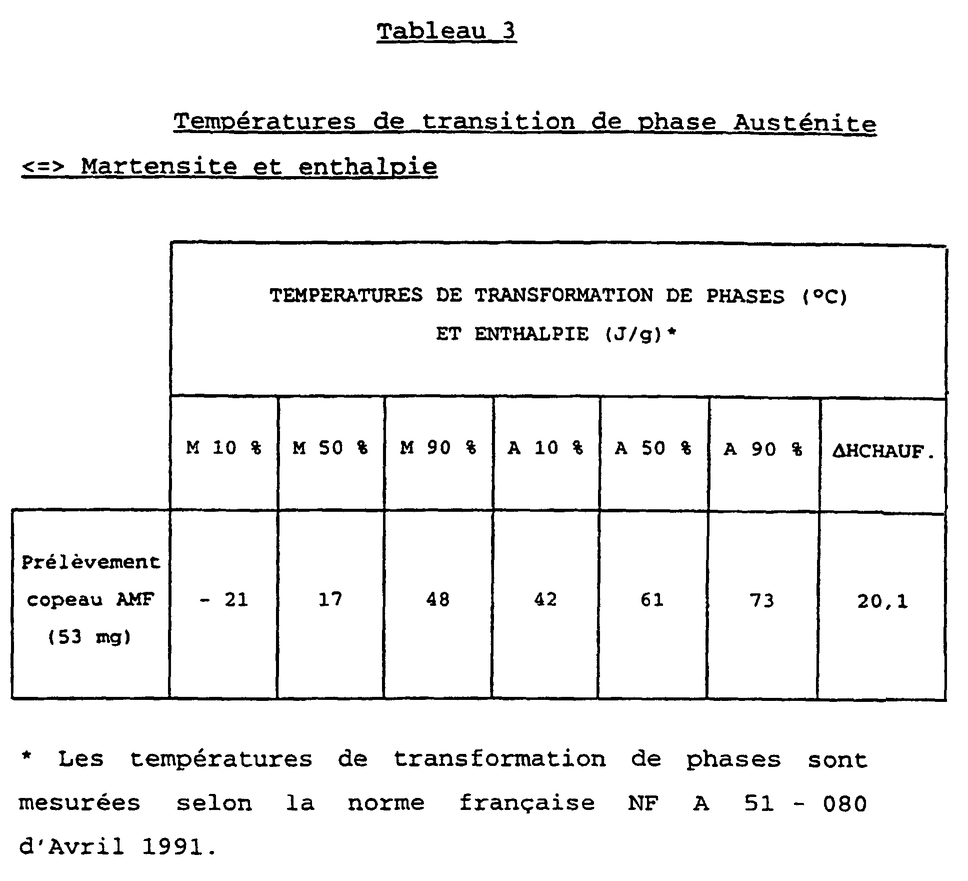

D'après ces valeurs, on peut dire qu'un copeau initialement à spires jointives, étiré à basse température, reprendra sa forme initiale entre les températures A 10 % (10 % de martensite au chauffage) = 42°C et A 90 % (90 % de martensite au chauffage) = 73°C.

### Propriété de mémoire de forme

Une méthode pour évaluer les propriétés d'effet mémoire de forme et la force de recouvrement de l'AMF consiste à étirer le copeau à spires jointives dans sa phase « basse température » (martensitique) en suspendant à l'une de ses extrémités une masse taraudée.

En réchauffant le copeau jusque dans sa phase « haute température » (austénitique), on observe une contraction du copeau lié à l'effet mémoire. Il est possible de mesurer à ce stade l'amplitude de déplacement au chauffage et de connaître la force de recouvrement (masse suspendue à l'extrémité du copeau).

Le travail maximal (W_{M}) fourni par l'AMF au chauffage est le produit de la force de recouvrement par le déplacement.

L'efficacité est définie par le rapport travail maximal (W_{M}) fourni sur volume (V), comme cela est indiqué dans le document de G. GUENIN « Les alliages à mémoire de forme », Techniques de l'Ingénieur, chapitre M 530, page 10, paragraphe 6.21.

Les propriétés fonctionnelles obtenues sur le copeau sont reportées dans le tableau 4.

**Tableau 4**

| Propriétés fonctionnelles d'un copeau AMF | | | | |
|---|---|---|---|---|
| FORCE APPLIQUEE (N) | AMPLITUDE DE DEPLACEMENT A FROID (ALLONGEMENT) (mm) | AMPLITUDE DE DEPLACEMENT AU CHAUFFAGE (CONTRACTION) (mm) | TRAVAIL ASSOCIE W_{M} (J = N.m) | EFFICACITE W_{M}/V (MJ/m³) |
| 0,35 | 10 | 10 | 0,035 | 0,31 |
| 1,10 | 62 | 57 | 0,061 | 0.54 |
| 1,36 | 87 | 79 | 0,11 | 0,93 |
| 2,68 | 168 | 143 | 0,37 | 3,30 |
| 3,73 | 195 | 152 | 0,56 | 4,88 |
| 4,00 | 205 | 157 | 0,62 | 5,40 |
| 4,64 | 250 | 182 | 0,83 | 7,27 |
| 6,15 | 305 | 200 | 1,21 | 10,58 |
| 7,60 | 309 | rupture du copeau | 0 | 0 |

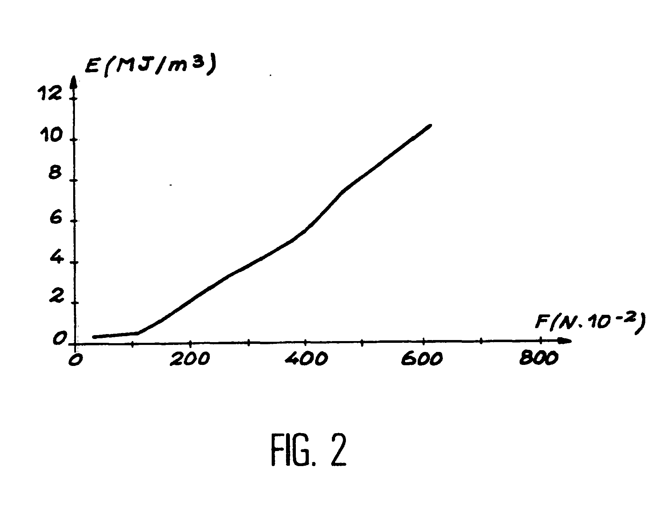

La figure 2 est un graphique qui représente l'évolution de l'efficacité en MJ/m³ en fonction de la force de recouvrement (en N.10⁻²) générée au chauffage par le copeau en AMF.

### Exemple 2

Comparaison des résultats obtenus avec le matériau du procédé selon l'invention, avec les résultats du matériau AMF obtenu par un procédé de fabrication de l'art antérieur, par exemple obtention du fil par tréfilage et mise sous forme de ressort par matriçage.

Dans cet exemple, on compare les propriétés, en particulier l'efficacité, d'un copeau obtenu par le procédé selon l'invention (voir exemple 1) et les propriétés de matériaux en AMF de l'art antérieur répertoriés dans divers documents.

Des essais réalisés sur du fil en TiNi sont dans le document de C. M. JACKSON et al, « 55 - Nitinol - The alloy with a memory », Rapport NASA - SP 5110, 1972, et indiquent une efficacité comprise entre 3,4 et 15,1 MJ/m³ pour un mode de sollicitation en traction.

Pour un ressort hélicoïdal, le facteur d'efficacité prévu dans le document de G. GUENIN, déjà cité ci-dessus, doit être réduit d'un facteur 2 à 3 par rapport à un mode de sollicitation en traction. Ceci indiquerait que sur un ressort, obtenu à partir de fil en AMF, l'efficacité maximale est de 15/2 MJ/m³, c'est-à-dire de l'ordre de 7,5 MJ/m³.

La Société AMT qui dimensionne des ressorts en AMF préconise une force de 2,5 N pour un déplacement de 12 mm avec un ressort de volume V = 119,1 mm³, soit une efficacité de 0,25 MJ/m³, P. MEYLAERS & al, CADSMA™ : « Computer Aided Design of shape memory applications ».

Selon le document B. PRANDI & al, « Experience in the production of Ti - Ni shape memory alloys », 6th world conf. On titanium, 1988, pp. 1 063 - 1 068, un ressort en AMF de volume V = 1 080 mm³ peut fournir une force de 20 N et un déplacement de 50 mm, soit une efficacité de 0,9 MJ/m³.

Ces données bibliographiques illustrent bien la supériorité des performances obtenues avec le copeau en AMF préparé par le procédé de l'invention dont l'efficacité est supérieure à 10 MJ/m³.

## Revendications

1. Procédé de fabrication, de mise en forme et d'usinage d' un ressort en alliage à mémoire de forme, comprenant une étape unique au cours de laquelle la fabrication, la mise en forme, et l'usinage dudit ressort sont réalisées simultanément en une seule et même opération par un procédé d'usinage de coupe choisi parmi le chariotage, le tournage et le décolletage, à partir d'une ébauche en alliage à mémoire de forme, le ressort fabriqué étant constitué par un copeau issu du procédé d'usinage de coupe appliqué à ladite ébauche, procédé dans lequel, afin de fabriquer un ressort homogène, continu, de géométrie définie se présentant sous la forme d'une bande, ruban ou méplat et présentant les propriétés mécaniques et/ou fonctionnelles voulues, on agit sur un ou plusieurs des paramètres opératoires dudit procédé d'usinage de coupe, choisis parmi la nature de l'outil de coupe, la profondeur de pénétration par passe, la vitesse de coupe, l'angle de coupe, l'affûtage de l'outil de coupe et, éventuellement, la vitesse de rotation de l'ébauche à partir de laquelle est fabriqué le ressort.

2. Procédé selon la revendication 1, dans lequel ledit procédé d'usinage de coupe est un procédé de tournage ou de chariotage et les paramètres opératoires du tournage ou de chariotage se situent dans les plages suivantes :
- profondeur de pénétration par passe : de 0,1 à 5 mm, par exemple 0,88 mm ;
- vitesse de coupe : de 5 à 40 m/min., par exemple 10 m/min. ;
- angle de coupe de 5 à 40°, par exemple de 10 à 15°.

3. Procédé selon la revendication 2, dans lequel l'outil de coupe présente, en outre, un affûtage spécifique sous la forme d'une gorge à section transversale en arc de cercle de rayon spécifique.

4. Procédé selon l'une quelconque des revendications 1 à 3, dans lequel ledit alliage à mémoire de forme est choisi parmi les alliages à base de cuivre, les alliages à base de titane et de nickel et les alliages à base de fer.

## Patentansprüche

1. Verfahren zur Herstellung einer Feder aus Formgedächtnisiegierung, einen einzigen Schritt umfassend, in dessen Verlauf die Herstellung, die Formung und die Bearbeitung der genannten Feder simultan in ein und derselben Operation durch ein spanabhebendes Bearbeitungsverfahren realisiert wird, das ausgewählt wird unter Langdrehen, Drehen und Abstechen, wobei man von einem Rohling aus Fonngedächtnislegierung ausgeht und die hergestellte Feder durch einen Span gebildet wird, erzeugt durch das spanabhebende Bearbeitungsverfahren, dem der genannte Rohling unterzogen wird,
wobei man bei diesem Verfahren einwirkt auf einen oder mehrere der Operationsparameter des genannten spanabhebenden Bearbeitungsverfahrens, ausgewählt unter der Art des Schneidwerkzeugs, der Schnitttiefe pro Arbeitsgang, der Schneidgeschwindigkeit, dem Schneidwinkel, dem Schneidwerkzeugschliff und eventuell der Rotationsgeschwindigkeit des Rohlings, aus dem die Feder hergestellt wird, um eine homogene kontinuierliche Feder von definierter Geometrie herzustellen, die sich in Form eines Bandes, Streifens oder einer Rechteckstange präsentiert und die erwünschten mechanischen und/oder funktionellen Eigenschaften hat.

2. Verfahren nach Anspruch 1, bei dem das genannte spanabhebende Bearbeitungsverfahren ein Dreh- oder Langdrehverfahren ist und die Operationsparameter des Drehens oder Langdrehens sich in folgenden Bereichen befinden:
- Schnitttiefe pro Arbeitsgang: von 0,1 bis 5 mm, zum Beispiel 0,88 mm;
- Schnittgeschwindigkeit: von 5 bis 40 m/min, zum Beispiel 10 m/min;
- Schnittwinkel: von 5 bis 40°, zum Beispiel von 10 bis 15°.

3. Verfahren nach Anspruch 2, bei dem das Schneidwerkzeug außerdem einen spezifischen Schliff in Form einer Hohlkehle aufweist, deren Querschnitt kreisbogenförmig ist, mit einem spezifischen Radius.

4. Verfahren nach einem der Ansprüche 1 bis 3, bei dem die genannte Formgedächtnislegierung ausgewählt wird unter den Legierungen auf Kupferbasis, den Legierungen auf Titan- und Nickelbasis und den Legierungen auf Eisenbasis.

## Claims

1. Process for the manufacture, shaping and machining of a shape memory alloy spring, comprising a single step during which the manufacture, shaping and machining of said spring are performed simultaneously in a single operation by a cutting machinihg process chosen from among transverse grinding, turning and screw cutting from a shape memory alloy blank, the manufactured spring being constituted by a chip resulting from the cutting machining process applied to said blank, wherein, in order to manufacture a homogeneous and continuous spring with a clearly defined geometry in the form of a strip, ribbon or flat and having desired mechanical and/or functional properties, action takes place on one or more of the operating parameters of said cutting machining process, chosen from among the nature of the cutting tool, the penetration depth per pass, the cutting speed, the cutting angle, the sharpening of the cutting tool and optionally the rotation speed of the blank from which the spring is manufactured.

2. Process according to claim 1, wherein said cutting machining process is a turning or transverse grinding process and the turning or transverse grinding operating parameters are within the following ranges:
- penetration depth per pass: 0.1 to 5 mm, e.g. 0.88 mm,
- cutting speed: 5 to 40 m/min, e.g. 10 m/min,
- cutting angle: 5 to 40°, e.g. 10 to 15°.

3. Process according to claim 2, wherein said cutting tool also has a specific sharpening in the form of a groove with a circular arc, specific radius, transverse cross-section.

4. Process according to any one of the claims 1 to 3, wherein said shape memory alloy is chosen from among copper-based alloys, titanium and nickel-based alloys and iron-based alloys.
